Europäisches Patentamt

European Patent Office

Office européen des brevets

(19)

(11)  EP 0 823 341 A1

(12)  **DEMANDE DE BREVET EUROPEEN**

(43) Date de publication:
  **11.02.1998  Bulletin 1998/07**

(51) Int. Cl.⁶: **B60C 15/00**,  B60C 15/04,
  B60C 15/06

(21) Numéro de dépôt: 97113305.3

(22) Date de dépôt: **01.08.1997**

(84) Etats contractants désignés:
  **AT BE CH DE DK ES FI FR GB GR IE IT LI LU MC
  NL PT SE**

(30) Priorité: **09.08.1996 FR 9610187**

(71) Demandeur:
  **COMPAGNIE GENERALE DES
  ETABLISSEMENTS MICHELIN-MICHELIN & CIE
  F-63040 Clermont-Ferrand Cédex 01 (FR)**

(72) Inventeurs:
  • **Ahouanto, Michel
    63530 Enval (FR)**
  • **Eynard, Claude
    63530 Chanat-la-Mouteyre (FR)**
  • **Peyrot, André
    63100 Clermont-Ferrand (FR)**

(74) Mandataire:
  **Doussaint, Jean-Marie
  Michelin & Cie,
  Service SGD/LG/PI Ladoux
  63040 Clermont-Ferrand Cedex 01 (FR)**

(54)  **Enveloppe de pneumatique dépourvue de tringle**

(57)  Enveloppe de pneumatique dont chaque bourrelet présente les caractéristiques suivantes :

a) il est dépourvu de tringle et il comporte un élément annulaire dont la résistance à la rupture en traction est notablement inférieure à celle nécessaire pour une tringle ;

b) au moins deux nappes de renfort sont disposées au contact ou à proximité de cet élément annulaire ;

c) l'ensemble des nappes de renfort a une résistance à la rupture en traction au moins égale à celle qui serait nécessaire pour une tringle ;

d) la nappe carcasse s'enroule autour de l'élément annulaire ;

e) la zone extérieure du bourrelet comporte une gomme ayant un module de perte élastique G" inférieur à 1 MPa et/ou elle comporte une gomme dont l'épaisseur est au plus égale à 2 mm.

Fig. 2

**Description**

Le brevet FR-A-1 169 474 décrit une enveloppe de pneumatique sans tringle comportant, à l'endroit de l'accrochage avec la jante, de petites nappes de câbles ou de fils qui sont parallèles entre eux dans chaque nappe et très inclinés sur le parallèle d'accrochage, les diverses nappes étant croisées entre elles. Le but de ce brevet est de faciliter la fabrication de l'enveloppe grâce à l'absence de tringle, car on élimine ainsi la nécessité de fabriquer une tringle. Cependant la réalisation de cette enveloppe pose des problèmes car il est difficile de garantir un maintien satisfaisant de ses éléments, lors des étapes de confection, de conformation et de cuisson, et l'enveloppe terminée ne permet pas d'avoir une endurance satisfaisante en roulage.

La demande de brevet EP-A-672 547 décrit une enveloppe de pneumatique dépourvue de tringle qui comporte un élément annulaire dont la résistance à la traction est notablement inférieure à celle qui serait nécessaire pour une tringle dans une enveloppe connue de même dimension, et au moins deux nappes de renfort au contact ou à proximité de l'élément annulaire, l'ensemble de ces nappes ayant une résistance à la rupture en traction au moins égale à celle qui serait nécessaire pour une tringle dans une enveloppe connue de même dimension. Cette enveloppe a une bonne endurance lors du roulage.

Le but de l'invention est de perfectionner cette enveloppe connue.

L'enveloppe de pneumatique conforme à l'invention comportant un sommet, deux bourrelets et au moins une nappe carcasse s'étendant d'un bourrelet à l'autre est caractérisée en ce que chaque bourrelet présente les points suivants :

a) il est dépourvu de tringle et il comporte un élément annulaire dont la résistance à la rupture en traction dans le sens longitudinal est notablement inférieure à celle qui serait nécessaire pour une tringle dans une enveloppe connue de même dimension, l'axe de cet élément annulaire étant l'axe de révolution de l'enveloppe ;

b) au moins deux nappes adjacentes dites "nappes de renfort" sont disposées au contact de l'élément annulaire, ou à proximité de cet élément annulaire ; ces nappes de renfort comportent chacune des fils de renfort parallèles entre eux, ces fils étant croisés d'une nappe à l'autre ; dans chaque nappe de renfort l'angle $\alpha$ est l'angle aigu formé, en un point quelconque d'un fil, par la direction de ce fil et la tangente à un cercle ayant pour axe l'axe de révolution de l'enveloppe et passant par ce point du fil, cet angle $\alpha$ vérifiant la relation $0° < \alpha \le 10°$, la mesure étant effectuée dans une zone où les nappes de renfort sont pratiquement orientées selon des plans parallèles entre eux ;

c) l'ensemble des nappes de renfort a une résistance à la rupture en traction, mesurée dans le sens longitudinal, au moins égale à celle qui serait nécessaire pour une tringle dans une enveloppe connue de même dimension ;

d) la nappe carcasse s'enroule autour de l'élément annulaire ; et

e) la zone extérieure du bourrelet destinée à être disposée du côté de la jante, au moins dans la région du crochet de jante, lorsque l'enveloppe est montée sur cette jante, remplit au moins une des conditions suivantes :

- elle comporte une gomme qui, à l'état vulcanisé, a un module de perte élastique G" inférieur à 1, G" étant exprimé en MPa (mégapascals), la mesure de G" étant effectuée à 10 % de cisaillement, à 50°C, avec une fréquence de 10 Hz ;

- elle comporte une gomme dont l'épaisseur est au plus égale à 2 mm.

L'invention sera aisément comprise à l'aide des exemples qui suivent, en faisant référence aux figures, toutes schématiques, dont la signification est la suivante :

- la figure 1 représente en coupe radiale une enveloppe de pneumatique conforme à l'invention, comportant deux bourrelets ;

- la figure 2 représente, plus en détail, en coupe radiale, un bourrelet de l'enveloppe représentée à la figure 1 ;

- la figure 3 représente, vue de profil, une partie du bourrelet représenté à la figure 2 ;

- la figure 4 représente, en coupe radiale, un bourrelet d'une enveloppe non conforme à l'invention ;

- la figure 5 représente, en coupe radiale, un bourrelet d'une autre enveloppe conforme à l'invention.

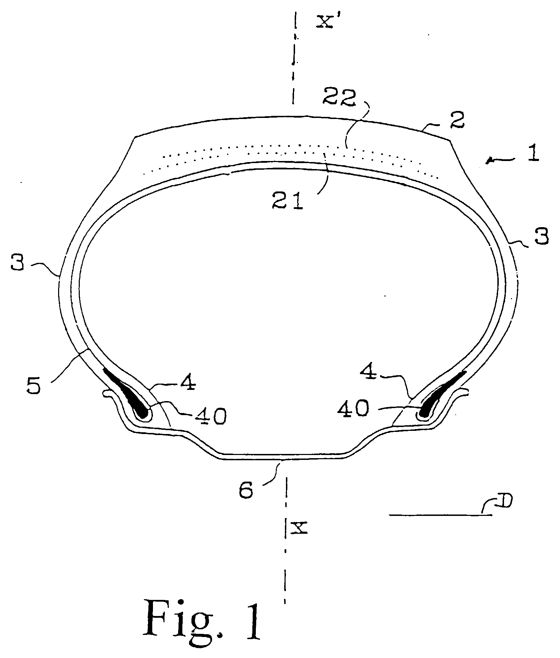

La figure 1 représente une enveloppe 1 de pneumatique conforme à l'invention. La figure 1 est une coupe radiale, c'est-à-dire une coupe effectuée selon un plan passant par l'axe de rotation de l'enveloppe 1, cet axe, non représenté sur la figure 1, étant parallèle à la droite D. Cette enveloppe 1 comporte un sommet 2, renforcé de façon connue par deux nappes de sommet 21, 22, deux flancs 3, et deux bourrelets 4. Chaque bourrelet 4 comporte un ensemble renforçant 40 qui sera décrit plus en détail ultérieurement.

Une nappe carcasse 5, par exemple une nappe carcasse radiale, s'étend d'un bourrelet 4 à l'autre, en traversant le sommet 2 et les flancs 3.

L'enveloppe 1 est montée sur la jante 6, le plan équatorial de l'enveloppe étant schématisé par la ligne xx', ce plan passant par le milieu du sommet 2 et étant perpendiculaire à l'axe de rotation de l'enveloppe.

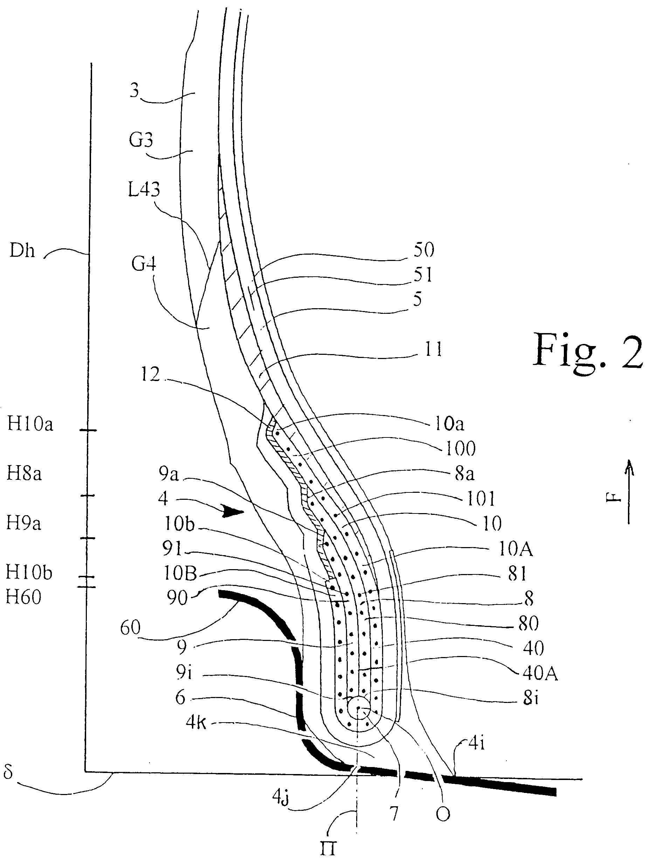

La figure 2 représente plus en détail un bourrelet 4 de l'enveloppe 1. Ce bourrelet 4 comporte un élément annulaire 7 constitué par exemple par un fil circulaire, l'axe de ce cercle étant l'axe de révolution de l'enveloppe.

Dans ce qui suit, le terme "gomme", utilisé dans un but de simplification, désigne de façon connue une composition de caoutchouc comportant au moins un caoutchouc et les ingrédients habituels dans l'industrie des pneumatiques, par exemple un agent de vulcanisation, notamment le soufre, un accélérateur de vulcanisation, un agent anti-oxydant, et des charges, par exemple le noir de carbone, la silice. Une telle composition est à l'état non vulcanisé lors de la préparation de l'enveloppe et à l'état vulcanisé dans l'enveloppe terminée.

Deux nappes de renfort adjacentes 8 et 9 ont leurs extrémités inférieures respectives 8i, 9i au contact de l'élément annulaire 7 et elles s'étendent au-dessus de cet élément 7, c'est-à-dire qu'elles sont plus proches du sommet 2 que l'élément 7. Ces nappes 8,9 comportent chacune une gomme de caoutchouc 80, 90 dans laquelle sont disposés des fils de renfort 81, 91. Une nappe de renfort 10 entoure l'élément 7 et les nappes 8,9 en formant ainsi deux nappes élémentaires 10A, 10B appliquées contre les nappes 8, 9 qui sont ainsi disposées en sandwich entre les nappes élémentaires 10A, 10B, les nappes en contact 10A, 8, 9, 10B, dénommées par la suite "nappes de renfort", étant alors pratiquement parallèles entre elles. La nappe 10 comporte une gomme de caoutchouc 100 dans laquelle sont disposés des fils de renfort 101. L'ensemble constitué par l'élément 7 et les nappes 10A, 8, 9, 10B est référencé 40, et l'ensemble de ces nappes, sans l'élément 7, est référencé 40A.

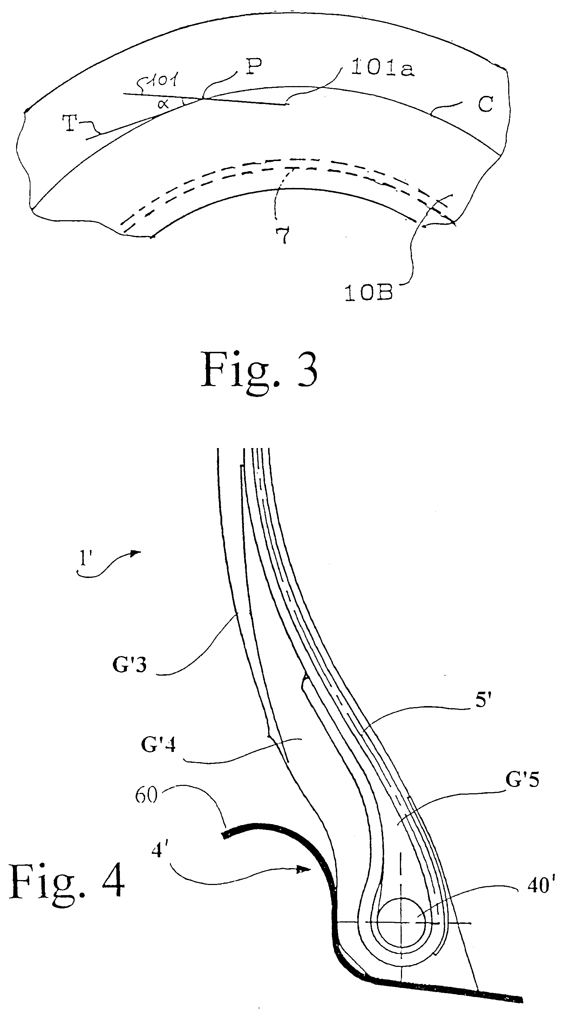

Dans une nappe de renfort quelconque donnée, 8, 9, 10A, 10B, les fils de cette nappe sont parallèles entre eu' et forment un angle aigu α, déterminé en un point quelconque du fil, entre la direction de ce fil et la tangente à un cercle ayant pour axe l'axe de révolution de l'enveloppe et passant par ce point. La figure 3 représente une portion de la nappe élémentaire 10B vue de profil, selon une direction parallèle à l'axe de révolution de l'enveloppe 1. On voit sur cette figure une portion pratiquement rectiligne de fil 101 représentée par le segment de droite 101a et une partie d'un cercle C passant par un point P de cette portion de fil, le cercle C ayant pour axe l'axe de révolution de l'enveloppe 1, la tangente au cercle C en P étant référencée T. L'angle α est donc l'angle aigu déterminé par T et 101a, la mesure étant effectuée à l'endroit où les nappes 10A, 8, 9, 10B sont pratiquement orientées selon des plans parallèles entre eux.

Pour chaque nappe 10A, 8, 9, 10B, l'angle α varie en fonction de la position du point P mais il est toujours supérieur à 0° et au plus égal à 10°.

Les fils d'une nappe de renfort sont croisés avec les fils de la ou des nappes de renfort adjacentes, c'est-à-dire que les fils de deux nappes adjacentes ne sont pas parallèles entre eux. C'est ainsi par exemple que les fils 81 de la nappe 8 sont croisés avec les fils 101 de la nappe adjacente 10A et avec les fils 91 de la nappe adjacente 9, les fils 101 de la nappe 10A étant croisés avec les fils 101 de la nappe 10B puisque ces nappes 10A, 10B sont constituées par le retournement de la même nappe 10 autour de l'élément 7.

Le terme "fil" doit être pris dans un sens très général pour l'élément 7 et les fils 81, 91, 101, un tel fil pouvant être constitué par un fil monofilamentaire ou multifilamentaire ou par un ensemble de tels fils tordus entre eux, formant notamment des câbles ou des retors. La matière constituant ces fils peut être variable, elle peut être par exemple métallique, notamment en acier, elle peut être en polymère organique, par exemple en matière cellulosique, en polyester ou en polyamide non aromatique ou aromatique, notamment des fils aramide, elle peut être aussi minérale, par exemple en verre, en carbone, chaque fil pouvant comporter plusieurs de telles matières.

L'élément annulaire 7 a une résistance à la rupture en traction, mesurée dans le sens longitudinal, qui est notablement inférieure à celle qui serait nécessaire pour une tringle dans une enveloppe connue de même dimension, et l'ensemble 40A des nappes de renfort a une résistance à la rupture en traction, mesurée dans le sens longitudinal, au moins égale à celle qui serait nécessaire pour une tringle dans une enveloppe connue de même dimension. Par direction longitudinale, on entend celle d'un cercle ayant pour axe l'axe de révolution de l'enveloppe, et passant par la tringle dans le cas de l'enveloppe connue, ou par l'ensemble des nappes de renfort, dans le cas de l'enveloppe conforme à l'invention. La résistance mécanique de ces nappes de renfort est donc la contribution essentielle à la résistance mécanique de l'ensemble renforçant 40, constitué par l'élément 7 et les nappes 8, 9, 10, cet ensemble permettant ainsi de remplacer la tringle d'une enveloppe classique.

La nappe carcasse 5 s'enroule autour de l'ensemble 40 et donc autour de l'élément 7. Cette nappe carcasse 5 comporte, de façon connue, une gomme de caoutchouc 50 dans laquelle sont disposés des fils de renfort 51, le terme "fil" ayant la signification générale donnée plus haut. Pour la clarté du dessin, seule une portion du fil 51 est représentée à la figure 2. Le module M10 de la gomme 50 est de préférence notablement inférieur au module M10 des gommes 80, 90, 100.

Entre la nappe carcasse 5 et l'ensemble 40 sont disposées deux gommes de caoutchouc 11, 12 dites gommes de découplage. La valeur M10 des gommes 11, 12 est de préférence comprise entre celle de la gomme 50 d'une part et celle des gommes 80, 90, 100 d'autre part.

Les gommes de découplage 11, 12 pourraient être remplacées par une gomme unique, par exemple une gomme continue dans la zone du bourrelet, disposée entre la carcasse 5 et l'ensemble 40.

Dans ce qui précède et ce qui suit, M10 représente, pour une gomme donnée, le rapport entre la contrainte de traction $\sigma 10$ pour un allongement $\delta L/L$ de 10 % et cet allongement, L étant la longueur initiale de l'éprouvette et $\delta L$ étant l'allongement de l'éprouvette. On a donc M10 = $\sigma 10[\delta L/L]^{-1}$ = $10\sigma 10$ . Ce module M10 est déterminé conformément à la norme AFNOR-NF-T46-002 de septembre 1988, dans les conditions normales de température et d'hygrométrie selon la norme AFNOR-NF-T40-101 de décembre 1979. Les valeurs de M10 des gommes 80, 90, 100 peuvent être identiques ou différentes et les valeurs de M10 des gommes 11, 12 peuvent aussi être identiques ou différentes.

Sur le plan de la figure 2, les extrémités opposées à l'élément 7 des nappes 8, 9 sont référencées 8a, 9a. De même, les extrémités, non au contact de l'élément 7, des nappes élémentaires 10A, 10B, sont notées respectivement 10a, 10b. Toutes les extrémités 8a, 9a, 10a, 10b, dites extrémités supérieures, sont disposées dans le bourrelet 4.

La gomme 11 est disposée à l'extérieur de l'ensemble 40, contre la partie supérieure de la nappe 10A et se prolonge au-dessus de l'ensemble 40 dans le flanc 3, et la gomme 12 est appliquée entre les extrémités 10a et 10b, en étant au contact des quatre nappes 10A, 8, 9, 10B.

Toutes ces extrémités supérieures sont disposées à des hauteurs différentes sur le plan de la figure 2 : lorsqu'on se déplace en direction du sommet dans le sens de la flèche F verticale, parallèle au plan équatorial supposé vertical, on trouve dans l'ordre à des hauteurs croissantes les extrémités 10b, 9a, 8a, 10a, c'est-à-dire que l'épaisseur, et donc la rigidité, de l'ensemble 40 diminue lorsqu'on se dirige vers le haut, dans le sens de la flèche F. Les hauteurs croissantes H10b, H9a, H8a, H10a, correspondant respectivement aux extrémités 10b, 9a, 8a, 10a, sont déterminées sur la droite verticale Dh à partir de la droite horizontale $\delta$ passant par l'extrémité inférieure 4i du bourrelet 4.

Lorsque l'enveloppe 1 est montée sur la jante 6, comme montré à la figure 2, la hauteur H10a de l'extrémité 10a, c'est-à-dire l'extrémité supérieure de l'ensemble 40, est supérieure à la hauteur H60 correspondant au crochet de jante 60. Dans ces conditions, le bourrelet 4 présente une rigidité importante dans sa zone basse, au contact de la jante 6, et au voisinage de celle-ci, au-dessus du crochet de jante 60, ce qui permet le maintien du bourrelet 4 sur la jante 6.

Dans la section radiale de la figure 2, le point 4j est situé sur la surface inférieure du bourrelet 4, au-dessous de l'ensemble 40, dans un plan $\pi$ passant par l'axe O de l'élément annulaire 7. Lorsque l'enveloppe 1 est à l'état libre, c'est-à-dire non montée sur la jante 6, le point 4j est situé plus près de l'axe de rotation de l'enveloppe 1 que dans une enveloppe connue à tringle classique à l'état libre, c'est-à-dire que le diamètre du cercle formé par l'extrémité 4j autour de cet axe est inférieur au diamètre correspondant d'une telle enveloppe connue non montée sur sa jante, la différence de ces diamètres étant par exemple comprise entre 0,5 % et 5 % et de préférence comprise entre 0,5 % et 2 %, cette différence étant avantageusement de l'ordre de 1 %. On favorise ainsi un bon accrochage de l'enveloppe 1 dans la jante 6, par suite de la compression de la partie inférieure du bourrelet qui prend, sur la jante 6, le même diamètre qu'une enveloppe connue a tringle classique, la jante 6 étant dans tous les cas une jante classique.

L'élément annulaire 7 a une résistance à la rupture en traction, mesurée dans le sens longitudinal, de préférence inférieure à 500 daN, et avantageusement inférieure à 300 daN, c'est-à-dire que cet élément a une résistance mécanique très inférieure à celle qui serait nécessaire pour une tringle, l'enveloppe 1 étant ainsi dépourvue de tringle classique. Cependant, cette résistance à la rupture en traction est choisie de façon à permettre les opérations de confection, de retroussage, de conformation et de vulcanisation utilisées pour la fabrication de l'enveloppe 1, ces opérations connues en soi étant par exemple décrites dans la demande EP-A-672 547 précitée. L'élément 7 a donc un niveau de tenue mécanique très inférieur à celui d'une tringle classique, l'élément 7 ne jouant donc pas le rôle d'une tringle, mais d'un élément permettant de positionner les unes par rapport aux autres les nappes 10A, 8, 9, 10B.

L'ensemble 40A des nappes de renfort a de préférence une résistance à la rupture en traction, mesurée dans le sens longitudinal, supérieure à 800 daN et avantageusement supérieure à 1000 daN.

Le bourrelet 4 comporte une gomme G4 destinée à venir au contact de la jante, c'est-à-dire dans la zone extérieure du bourrelet. La ligne de jonction L43 entre la gomme G4 et la gomme G3 recouvrant l'extérieur des flancs 3 est disposée au-dessus de la hauteur H10a, et donc au-dessus du crochet de jante 60. Les gommes G4 et G3 ont chacune, à l'état vulcanisé, un module de perte élastique G" inférieur à 1, G" étant exprimé en MPa (mégapascals), la mesure de G" étant effectuée à 10 % de cisaillement, à 50°C, avec une fréquence de 10 Hz. La définition de G" et les conditions générales d'essais sont données dans la norme française AFNOR NF T 46-026 de décembre 1984.

La gomme G4 a donc un module G" faible par rapport aux gommes correspondantes de zone extérieure des bourrelets classiques à tringles conventionnelles, car ces gommes conventionnelles ont un module G" au moins égal à 1.

De préférence la gomme G4 a un module G" inférieur à 0,5 et avantageusement un module G" inférieur à 0,1.

Le fait que l'ensemble 40 s'étende au-dessus du crochet de jante 60 permet de rigidifier le bourrelet dans cette zone critique et donc de limiter l'usure au contact de la jante, et particulièrement au contact du crochet de jante, de telle sorte qu'il est possible d'utiliser une gomme G4 ayant un module G" plus faible que dans les enveloppes classiques. Un autre mode de réalisation de l'invention consiste, en conséquence de la rigidification précitée, à diminuer l'épaisseur de la gomme G4 par rapport aux enveloppes classiques, cette épaisseur étant au plus égale à 2 mm, alors que dans les enveloppes classiques elle est notablement supérieure à 2 mm. Dans ce dernier mode de réalisation de l'invention, la gomme G4 peut être identiques aux gommes G4 des enveloppes classiques, mais on peut aussi combiner ces deux modes de réalisation, la gomme G4 ayant alors un module G" inférieur à 1 et une épaisseur au plus égale à 2 mm. L'utilisation d'un module G" inférieur à 1 et/ou une épaisseur au plus égale à 2 mm, pour la gomme G4 de l'enveloppe 1 conforme à l'invention permet de diminuer les pertes hystérétiques et donc l'échauffement de la gomme G4, ce qui permet d'augmenter l'endurance du bourrelet 4, et donc de l'enveloppe 1 tout en diminuant la résistance au roulement.

L'invention s'applique aux cas où les nappes renforçantes 10A, 8, 9, 10B ne sont pas toutes étagées en hauteur, par exemple aux cas où deux de ces nappes ont des extrémités à la même hauteur, une caractéristique préférentielle étant qu'il y ait une diminution progressive de la rigidité de l'ensemble 40 en direction du sommet 2, par suite de la diminution progressive de l'épaisseur de cet ensemble en direction du sommet, les extrémités 10b, 9a, 8a, 10a n'étant donc pas toutes à la même hauteur.

On peut envisager d'autres moyens que la diminution de l'épaisseur des nappes renforçantes pour obtenir cette diminution de la rigidité.

On peut envisager que les gommes G3 et G4 soient identiques, la gomme étant unique et continue tout le long de l'élément 40 et du flanc 3, la ligne L43 n'existant plus, ce qui peut avoir pour avantage de simplifier la fabrication de l'enveloppe 1, par suite de l'utilisation d'une même gomme pour les flancs et la zone extérieure du bourrelet. De préférence la gomme G4 s'étend autour de l'ensemble 40 jusqu'à une portion interne inférieure du bourrelet 4 incluant la pointe de gomme 4k qui comporte l'extrémité inférieure 4i.

La superposition des nappes 10A, 8, 9, 10B est réalisée par exemple sans interposer entre elles de gomme, et la nappe carcasse 5 lors de son retournement autour de l'ensemble 40, n'est au contact que de l'ensemble 40 et des gommes de découplage 11, 12, d'épaisseur faible, de l'ordre du millimètre. Au contraire, les enveloppes connues à tringles classiques comportent une masse importante de gomme, appelée souvent "gomme de bourrage" ou "bourrage tringle", entre le retournement de la nappe carcasse et la tringle.

La figure 4 montre, à titre d'exemple, un bourrelet 4' d'une enveloppe connue 1', avec une tringle conventionnelle 40' une gomme de flanc G'3, une gomme G'4, dans la zone extérieure du bourrelet 4', dont le module G" est au moins égal à 1 et notablement supérieur au module G" de la gomme de flanc G'3, l'épaisseur de cette gomme G'4 étant supérieure à 3 mm pour éviter l'usure au contact de la jante et en particulier du crochet de jante. Une masse importante de gomme G'5 est disposée entre le retournement de la carcasse 5'et la tringle 40'. Cette gomme G'5, qui s'étend au-dessus du crochet de jante 60 pour amener une certaine rigidification du bourrelet a un module G" très élevé, de l'ordre de 8. Les deux gommes G'4 et G'5 sont donc très hystérétiques et provoquent un échauffement du bourrelet 4 ainsi qu'une résistance au roulement importante.

A titre d'exemple l'enveloppe 1 vulcanisée conforme à l'invention a les caractéristiques suivantes :

- Dimension : 175/70R-13.

- Nappes sommet 21,22 : nappes connues comportant des câbles d'acier de renfort faisant un angle de 21° avec le plan équatorial, ces renforts étant croisés d'une nappe à l'autre.

- Nappe carcasse 5 : nappe radiale classique ayant des fils 51 en polyester ; valeur de M10 de la gomme 50 : 0,3 MPa.

- Elément annulaire 7 : deux spires d'un fil constitué d'un retors aramide ; résistance à la rupture en traction du fil : 100 daN, la résistance globale à la traction, dans le sens longitudinal de l'élément 7 étant donc de 200 daN.

- Nappes 10A, 8, 9, 10B : nappes de nature identique avec des fils en aramide ; pour toutes les nappes, l'angle $\alpha$ est pratiquement égal à 5°, ces fils étant croisés d'une nappe à l'autre ;

-- résistance à la rupture en traction, mesurée pour chaque nappe, dans le sens des fils de la nappe : 5000 daN/dm de largeur de nappe, la résistance à la rupture en traction, mesurée dans le sens longitudinal de l'ensemble 40A étant égale environ à 3500 daN ;

-- valeur de M10 des gommes 80, 90, 100 (identiques) : 2,4 MPa.

- Gommes 11, 12 de découplage :

-- valeur de M10 : 0,6 MPa pour la gomme 12, 0,8 pour la gomme 11,
-- ces gommes 11, 12 ont une épaisseur de 0,8 mm et elles ont une valeur G" inférieure à celle des gommes 80, 90, 100, 50.

- Les gommes G3 et G4 sont identiques et forment une gomme unique ayant une valeur de G" égale à 0,08 MPa et une épaisseur de 1,5 mm au niveau du crochet de jante 60.

- Le diamètre de l'ensemble des points 4j est de 322 mm avant montage sur la jante 6, ce diamètre sur la jante étant de 328 mm, ce qui représente donc une diminution du diamètre de 6 mm.

- Les hauteurs H10a, H8a, H9a, H10b, sont respectivement de 30 mm, 20 mm, 15 mm, 12 mm.

- La hauteur H60 du crochet de jante 60 est comprise entre H8a et H9a.

- Poids de l'enveloppe : 6,3 kg.

On réalise d'autre part une enveloppe connue, de même dimension 175/70R-13, identique à l'enveloppe de l'invention avec les différences suivantes :

- L'ensemble renforçant 40 est remplacé par une tringle classique en métal dont la résistance à la rupture en traction, mesurée dans le sens longitudinal, est de 2000 daN.

- Elle comporte une gomme flanc identique à la gomme G3 précitée et une gomme G'4 de G" 1 MPa dont l'épaisseur dans la zone du crochet de jante est de 3 mm.

- Elle comporte une gomme G'5 servant de bourrage tringle ayant un G" de 8 MPa et un poids important (231 g).

- Le diamètre des points 4j, avant montage sur la jante 6 connue, identique à celle sur laquelle se monte l'enveloppe conforme à l'invention, est de 325 mm, la différence de diamètre des points 4j étant donc de 3 mm, la différence des diamètres des points 4j entre l'enveloppe connue et l'enveloppe conforme à l'invention, à l'état libre c'est-à-dire avant montage sur la jante, étant donc de 0,9 %.

- Elle a un poids de 6,8 kg.

Pour ces deux enveloppes, les définitions et les conditions de détermination de G" et de M10 sont celles données précédemment.

On constate donc que l'invention permet une diminution du poids supérieure à 7 %.

On soumet les deux enveloppes à un test de vitesse limite, à un test de résistance au roulement et à un test d'endurance.

Test de vitesse limite

On gonfle les enveloppes à la pression maximale prévue pour ces enveloppes par l'ETRTO (European Tyre and Rim Technical Organization), soit 2,5 bars, et on leur applique la charge maximale prévue par l'ETRTO, soit 466 daN. On fait ensuite rouler les enveloppes en augmentant la vitesse jusqu'à la mort des enveloppes qui se produit à une vitesse de 215 km/h.

On constate que dans les deux cas la détérioration de l'enveloppe à la fin du roulage est due à la déchéance du sommet 2, pas à l'ensemble 40 conforme à l'invention ou à la tringle classique. Les deux enveloppes ont donc un comportement analogue en ce qui concerne la vitesse limite.

Résistance au roulement

La résistance au roulement est déterminée conformément à la norme ISO 8767 de 1992, à 80 km/h. On constate que l'enveloppe conforme à l'invention permet une diminution de la résistance au roulement d'environ 1 kg/t, soit une diminution d'environ 10 %, par rapport à l'enveloppe connue. L'invention permet donc de diminuer notablement la résistance au roulement, par suite en particulier de la diminution de l'hystérésis de la gomme G4 et de l'absence de la gomme servant comme bourrage tringle, utilisée dans l'enveloppe connue.

Endurance

On fait rouler les enveloppes à la pression normale prévue par l'ETRTO (environ 2 bars), l'enveloppe connue étant soumise à la charge maximale prévue par l'ETRTO (466 daN) et l'enveloppe de l'invention étant soumise à une charge supérieure de 30 % à cette charge maximale. On constate alors que les enveloppes peuvent rouler sans dommage pendant le même temps, c'est-à-dire que l'enveloppe conforme à l'invention présente la même endurance que l'enveloppe connue si cette enveloppe conforme à l'invention est soumise à une surcharge de 30 % par rapport à l'enveloppe connue.

L'enveloppe conforme à l'invention a donc une bien meilleure endurance que l'enveloppe connue à charge égale. Cet effet bénéfique de l'invention est encore dû essentiellement à la diminution de l'hystérésis des gommes utilisées pour préparer cette enveloppe, comme indiqué plus haut.

En résumé, l'invention présente les avantages suivants :

- la réalisation de l'enveloppe est simple et économique car il n'y a pas de fabrication préalable de tringle ;

- la présence de l'élément 7 permet un positionnement précis et reproductible des nappes 10A, 8, 9, 10B sans autre élément de maintien ;

- l'utilisation d'une gomme à faible module de perte élastique G" et/ou de faible épaisseur dans la zone extérieure du bourrelet est permise grâce à la rigidité de l'ensemble renforçant conforme à l'invention qui s'étend sur toute la région du bourrelet destinée à entrer en contact avec la jante, cette rigidité diminuant l'usure au contact de la jante ; cette utilisation diminue notablement la résistance au roulement sans altérer d'aucune manière la qualité de maintien de l'enveloppe par la jante et cette utilisation permet aussi d'augmenter l'endurance de l'enveloppe par suite de la diminution d'hystérésis de la gomme utilisée au contact de la jante ; en outre, de façon préférentielle :

- la présence des gommes de découplage 11, 12 ainsi que la diminution progressive de la rigidité de l'ensemble 40 en direction du haut de l'enveloppe permet les effets de cisaillement entre la nappe carcasse radiale et l'ensemble 40 rigide longitudinalement ainsi qu'une transition progressive entre la rigidité des bourrelets 4 et la souplesse des flancs 3 ; ceci augmente l'endurance de l'enveloppe et diminue l'usure au contact de la jante, en particulier dans la zone du crochet de jante ;

- l'absence de quantité substantielle de gomme dans le retournement de la carcasse diminue le poids et le coût de l'enveloppe ; elle diminue aussi la résistance au roulement et permet d'augmenter l'endurance de l'enveloppe par suite de la diminution d'hystérésis, de façon analogue à ce qui a été dit plus haut.

L'enveloppe conforme à l'invention peut être fabriquée selon des procédés connus, par exemple des procédés analogues à ceux décrits dans la demande de brevet EP-A-672 547 précitée, ces procédés n'étant pas détaillés ici dans un but de simplification.

Bien entendu, l'invention n'est pas limitée aux exemples de réalisation précédemment décrits.

C'est ainsi par exemple que l'ensemble 40 pourrait comporter seulement deux nappes de renfort, par exemple les nappes 8, 9 ou les nappes 10A, 10B.

D'autre part les nappes 8, 9 pourraient être à proximité de l'élément 7, par exemple en étant séparées de cet élément par une gomme de caoutchouc d'épaisseur faible, par exemple inférieure à 5 mm, et les nappes 8, 9, 10 pourraient être différentes, par exemple avec des gommes de modules différents et on pourrait n'utiliser qu'une gomme de découplage.

Les nappes 8, 9 d'autre part peuvent être réalisées en pliant une nappe unique.

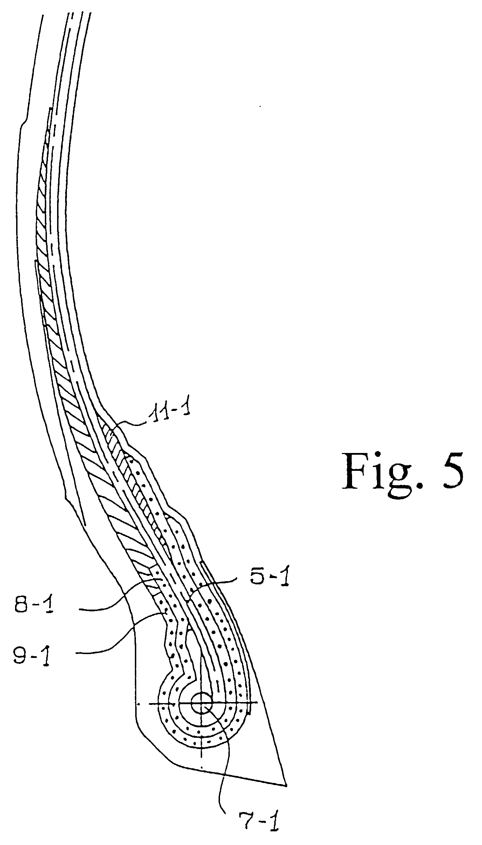

On peut aussi envisager des cas où la nappe carcasse est disposée entre des nappes de renfort, comme représenté à la figure 5, où la nappe carcasse 5-1 s'enroule directement autour de l'élément annulaire 7-1, deux nappes de renfort 8-1 et 9-1 s'enroulant autour de la nappe carcasse 5-1 et de l'élément 7-1.

D'autre part, l'invention s'applique aux enveloppes de pneumatiques dont les carcasses ne sont pas radiales.

## Revendications

1. Enveloppe de pneumatique comportant un sommet, deux bourrelets et au moins une nappe carcasse s'étendant d'un bourrelet à l'autre, caractérisée en ce que chaque bourrelet présente les points suivants :

   a) il est dépourvu de tringle et il comporte un élément annulaire dont la résistance à la rupture en traction dans le sens longitudinal est notablement inférieure à celle qui serait nécessaire pour une tringle dans une enveloppe connue de même dimension, l'axe de cet élément annulaire étant l'axe de révolution de l'enveloppe ;

   b) au moins deux nappes adjacentes dites "nappes de renfort" sont disposées au contact de l'élément annulaire, ou à proximité de cet élément annulaire ; ces nappes de renfort comportent chacune des fils de renfort parallèles entre eux, ces fils étant croisés d'une nappe à l'autre ; dans chaque nappe de renfort l'angle $\alpha$ est l'angle aigu formé, en un point quelconque d'un fil, par la direction de ce fil et la tangente à un cercle ayant pour axe l'axe de révolution de l'enveloppe et passant par ce point du fil, cet angle $\alpha$ vérifiant la relation $0° < \alpha \leq 10°$, la mesure étant effectuée dans une zone où les nappes de renfort sont pratiquement orientées selon des plans parallèles entre eux ;

   c) l'ensemble des nappes de renfort a une résistance à la rupture en traction, mesurée dans le sens longitudinal, au moins égale à celle qui serait nécessaire pour une tringle dans une enveloppe connue de même dimension ;

   d) la nappe carcasse s'enroule autour de l'élément annulaire ; et

   e) la zone extérieure du bourrelet destinée à être disposée du côté de la jante, au moins dans la région du crochet de jante, lorsque l'enveloppe est montée sur cette jante, remplit au moins une des conditions suivantes :

   - elle comporte une gomme qui, à l'état vulcanisé, a un module de perte élastique G" inférieur à 1, G" étant exprimé en MPa (mégapascals), la mesure de G" étant effectuée à 10 % de cisaillement, à 50°C, avec une fréquence de 10 Hz ;

- elle comporte une gomme dont l'épaisseur est au plus égale à 2 mm.

2. Enveloppe de pneumatique selon la revendication 1, caractérisée en ce qu'elle est dépourvue de gomme de bourrage dans la région de retournement de la carcasse autour de l'élément annulaire.

3. Enveloppe de pneumatique selon l'une quelconque des revendications 1 ou 2, caractérisée en ce que, lorsque l'enveloppe est montée sur la jante à laquelle elle est destinée, l'extrémité supérieure de l'ensemble de renfort, se trouve au-dessus du niveau de la hauteur correspondant au crochet de jante, la rigidité du bourrelet s'étendant ainsi au-dessus du crochet de jante, en direction du sommet.

4. Enveloppe de pneumatique selon l'une quelconque des revendications 1 à 3, caractérisée en ce que la rigidité de l'ensemble des nappes diminue progressivement en direction du sommet.

5. Enveloppe de pneumatique selon la revendication 4, caractérisée en ce que cette diminution progressive de la rigidité est obtenue par une diminution progressive de l'épaisseur de l'ensemble des nappes en direction du sommet.

6. Enveloppe de pneumatique selon l'une quelconque des revendications 1 à 5, caractérisée en ce que les points de la surface inférieure du bourrelet, sous les nappes de renfort et sous l'élément annulaire, lorsque l'enveloppe est à l'état libre, c'est-à-dire non montée sur la jante qui lui est destinée, sont situés plus près de l'axe de rotation de l'enveloppe que dans une enveloppe connue à tringle classique, le diamètre du cercle formé par ces points autour de cet axe étant inférieur au diamètre correspondant d'une telle enveloppe connue, la différence de ces diamètres étant comprise entre 0,5 % et 5 %.

7. Enveloppe de pneumatique selon l'une quelconque des revendications 1 à 6, caractérisée en ce que la nappe carcasse et chaque nappe de renfort comporte une gomme, le module M10 de la gomme de la carcasse étant notablement inférieur au module M10 de chacune des gommes des nappes de renfort.

8. Enveloppe de pneumatique selon la revendication 7, caractérisée en ce qu'elle comporte au moins une gomme, dite gomme de découplage, qui est disposée entre la nappe carcasse et l'ensemble de renfort, le module M10 de cette gomme de découplage étant compris entre le module M10 de la gomme de carcasse et le module M10 de chaque gomme de nappe de renfort.

9. Enveloppe de pneumatique selon l'une quelconque des revendications 1 à 8, caractérisée en ce que l'élément annulaire a une résistance à la rupture en traction, mesurée dans le sens longitudinal, inférieure à 500 daN.

10. Enveloppe de pneumatique selon la revendication 9, caractérisée en ce que l'élément annulaire a une résistance à la rupture en traction, mesurée dans le sens longitudinal, inférieure à 300 daN.

11. Enveloppe de pneumatique selon l'une quelconque des revendications 1 à 10, caractérisée en ce que la résistance à la rupture en traction, mesurée dans le sens longitudinal, de l'ensemble des nappes de renfort est supérieure à 800 daN.

12. Enveloppe de pneumatique selon la revendication 11, caractérisée en ce que la résistance à la rupture en traction, mesurée dans le sens longitudinal, de l'ensemble des nappes de renfort est supérieure à 1000 daN.

13. Enveloppe de pneumatique selon l'une quelconque des revendications 1 à 12, caractérisée en ce que la nappe carcasse s'enroule autour de l'ensemble des nappes de renfort.

14. Enveloppe de pneumatique selon l'une quelconque des revendications 1 à 12, caractérisée en ce qu'au moins une nappe de renfort s'enroule autour de la nappe carcasse et de l'élément annulaire.

15. Enveloppe de pneumatique selon l'une quelconque des revendications 1 à 14, caractérisée en ce que la nappe carcasse est radiale.

Fig. 1

Fig. 2

## Fig. 3

## Fig. 4

11-1

Fig. 5

5-1

8-1

9-1

7-1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,X | EP 0 672 547 A (COMPAGNIE GENERALE DES ETABLISSEMENTS MICHELIN)<br>* le document en entier * | 1-15 | B60C15/00<br>B60C15/04<br>B60C15/06 |
| Y | EP 0 465 188 A (SUMITOMO RUBBER INDUSTRIES LIMITED)<br>* page 6, ligne 51 - ligne 56; figure 3 * | 1 | |
| Y | EP 0 664 233 A (SEDEPRO)<br>* abrégé; figures * | 1 | |
| A | FR 1 256 432 A (DUNLOP RUBBER COMPANY LIMITED)<br>* le document en entier * | 1 | |
| A | DE 11 89 400 A (COMPAGNIE GENERALE DES ETABLISSEMENTS MICHELIN)<br>* revendications * | 1 | |

**DOMAINES TECHNIQUES RECHERCHES (Int.Cl.6)**

B60C

Le présent rapport a été établi pour toutes les revendications

| Lieu de la recherche | Date d'achèvement de la recherche | Examinateur |
|---|---|---|
| LA HAYE | 20 novembre 1997 | Reedijk, A |

EPO FORM 1503 03.82 (P04C02)